# EUROPEAN PATENT APPLICATION

(11) **EP 0 899 072 A1**
(43) Date of publication of application: **03.03.1999**
(21) Application number: 98300145.4
(22) Date of filing: 09.01.1998
(51) Int. Cl.: B29B 17/00

(54) **Method for producing plastic forms from waste synthetic resin**

(30) Priority: 28.08.1997 KR 9741993
(71) Applicant: Lee, Jae Ho, Dongjack-gu, Seoul (KR)
(72) Inventor: Lee, Jae Ho, Dongjack-gu, Seoul (KR)
(74) Representative: Andrews, Timothy Stephen

(57) **Abstract**

A method for producing products from waste synthetic resins. A mixture comprising 70-90 % by weight of waste synthetic resins and about 10-30 % by weight of a binder is melted at a temperature of about 150-300 °C while stirring at about 50-70 rpm and subjected to extrusion-molding. Prior to melting, the waste synthetic resins are crushed to a particle size less than 100 mesh (US sieve number).

## Description

### BACKGROUND OF THE INVENTION

### 1. Field of the invention

The present invention relates to a method for producing plastic forms from waste synthetic resins. More particularly, the present invention relates to a method for regenerating waste synthetic resins by use of a binder, thereby producing useful plastic forms which exhibit homogeneous properties and high strength. Also, the present invention is concerned with plastic products regenerated from waste synthetic resins.

### 2. Description of the Prior Art

Generally, the amount of waste synthetic resins increases with a rise in the standard of living in a nation. All over the world, a tremendous quantity of waste synthetic resins are generated every year but they are reused at very low percentages: most of them are disposed by burial in land or by incineration.

The low reuse percentage of synthetic resin wastes is attributed, in part, but critically, to the fact that they are able to be disposed only after they are classified according to their compositions and colors and washed. For example, when a mixture of the waste synthetic resins which are diverse in composition or physical properties or etc. is collectively molten for regeneration without being classified and/or washed, the melting point of the waste mixture is hard to settle because the diverse base resins and additives of the waste synthetic resins are different from each other in melting point. In addition, if they are molten, they do not mingle with each other well on account of their different properties. Thus, not only is it difficult to knead the mixture of waste synthetic resins, but also the product obtained from the mixture by extrusion molding does not show homogeneous properties over its whole body. In result, for example, the inhomogeneous kneading of the diverse base resins cause the final product to be distorted and the inhomogeneous properties give an uneven surface and poor strength to the final product.

Therefore, the classification and the washing are requisite for regenerating a mixture of waste synthetic resins. However, it is virtually impossible to classify them because they are exceptionally diverse in kind and composition and there is a worry that the washing might cause secondary water pollution.

Regeneration of waste synthetic resin into products for use in construction, such as cross ties and molding, is disclosed in Korean Pat. Pub. No. 96-11322. However, this prior art utilizes a single type of waste synthetic resin and is incapable of melting and extruding various waste resins, together.

### SUMMARY OF THE INVENTION

Therefore, it is an object of the present invention to overcome the above problems encountered in prior arts and to provide a method for producing a product from various waste synthetic resins, which shows homogeneous physical properties throughout its whole body and has substantial strength.

It is another object of the present invention to provide a method for regenerating waste synthetic resins into useful products without classifying and washing the waste resins.

It is a further object of the present invention to provide a product which is prepared from various waste synthetic resins and is superior in physical properties.

In accordance with an aspect of the present invention, there is provided a method for producing a product from waste synthetic resins, wherein the waste synthetic resins are pulverized to a size smaller than 100 mesh (US sieve number), mixed with a binder while stirring at about 50-70 rpm, melted at a temperature of about 150-300 °C, and subjected to extrusion-molding, the binder amounting to about 10-30 % by weight, in total and being selected from the group consisting of coal ash, talc, elvan, slake lime, white clay, loess, clay and the mixtures thereof. In accordance with another aspect of the present invention, there is provided a product produced by the method.

### BRIEF DESCRIPTION OF THE DRAWINGS

The above and other objects and aspects of the invention will become apparent from the following description of embodiments with reference to the accompanying drawings in which:

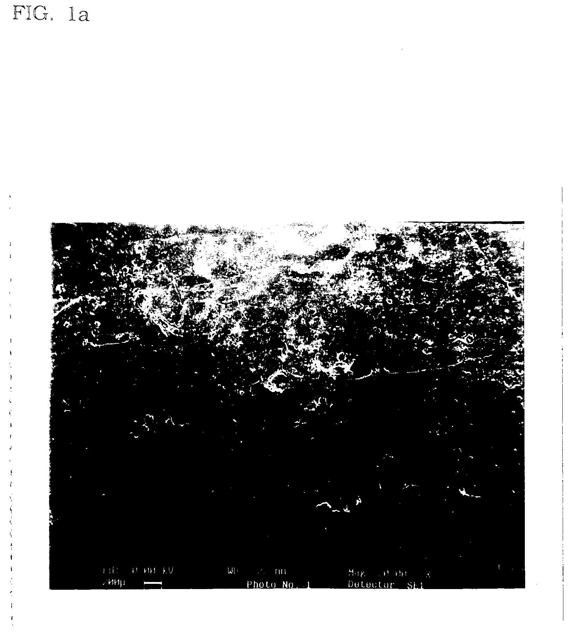

Fig. 1a is a scanning electron microscope photograph showing the surface of a sheet produced in Example II of the present invention, magnified by 20 times;

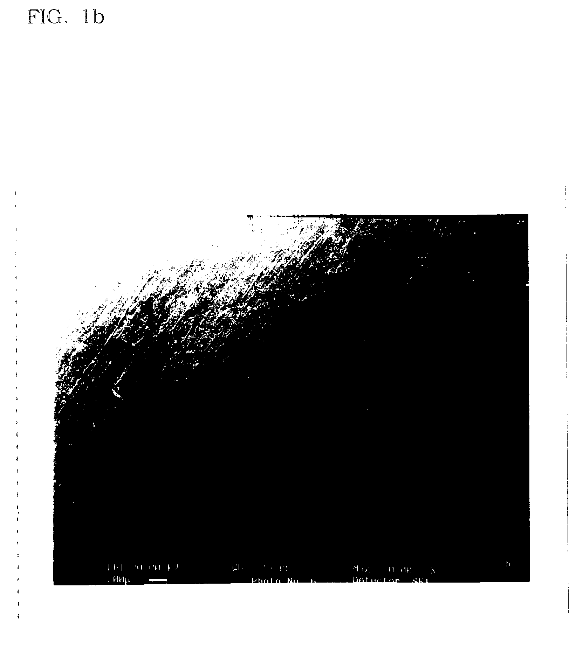

Fig. 1b is a scanning electron microscope photograph showing the surface of a sheet produced in Example III of the present invention, magnified by 20 times; and

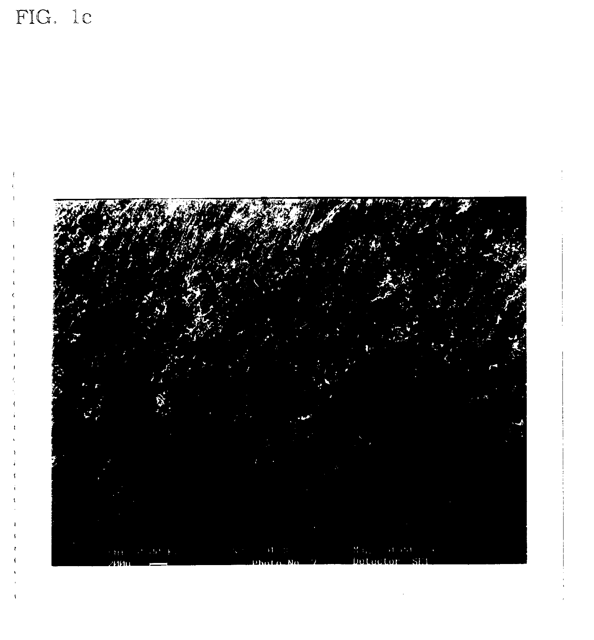

Fig. 1c is a scanning electron microscope photograph showing the surface of a sheet produced in Example IV of the present invention, magnified by 20 times.

### DESCRIPTION OF THE INVENTION

In the present invention, waste synthetic resins, as they are, can be used without being selected, washed or classified, irrespective of their kinds. Concrete examples of the waste synthetic resins available in the present invention include thermoplastic waste resins, such as polyethylene, polypropylene polystyrene, acrylonitrile/styrene (AS), acrylonitrile/butadiene/styrene (ABS), polyvinylchloride, polyvinylidene chloride, polymethylmethacrylate, polyamide, polyacetal, polycarbonate, polyphenylene ether, polyethylene terephthalate, polysulfone, polyether sulfone, polyarylate, polyimide, polyamideimide, polyetherimide, polyetheretherketone, polytetrafluoroethylene, etc, and thermosetting waste resins, such as phenol resins, epoxy resins, diarylphthalate resins, unsaturated polyester resins, melamine resins, urea resins, etc.

The term "waste synthetic resins" as used herein means all types of waste synthetic resins whether they are somewhat contaminated or not. Thus, neither an additional process of selecting the same kinds of resin from the waste synthetic resins, nor a washing process is required, so that the invention is very favorable in economical aspects as well as in production time aspects.

In accordance with the present invention, the waste synthetic resins are preferably used at an amount of about 70-90 % by weight based on the total weight of the product. For example, if too much waste synthetic resins are used, the final product thus obtained is so unstable that it is distorted. On the other hand, if the waste synthetic resins are used at an amount less than 70 % by weight, the product is poor in mechanical properties, such as hardness and strength.

As for the binder useful for the present invention, it is added to make the diverse resins mingle homogeneously with each other during melt kneading and molding processes, thereby preventing the distortion and improving the stability and the mechanical properties of the product.

In accordance with the present invention, the binder is selected from the group consisting of coal ash, tale, elvan, slake lime, white clay, loess, clay and the mixtures thereof. Their selection must be done in consideration of economical aspects and the use of the product. For example, coal ash is economically favorable. Powdery elvan and loess are advantageously selected for products for use in interior decoration, for examples, sheets for covering the bottom of a room or floor, because they radiate far infrared rays which are known to be healthful to the human body.

It is preferred that the binder is used at an amount of about 10 to 30 % by weight based on the total weight of the final product. For example, if the binder is added at an amount less than 10 % by weight, the final product is so problematic in stability that distortion occurs. On the other hand, if the amount of the binder exceeds 30 % by weight, the product is poor in mechanical properties, such as hardness and strength.

The waste synthetic resins and the binder are pulverized to a particle size of 100 mesh (US sieve number) or smaller and preferably 200 mesh or smaller when considering processability in the mixing and melting processes.

Depending on the uses of the final product, additives may be used. Like the waste synthetic resins and the binder, the additives are preferably added as powder but not limited to this. Preferably, the additive is added at an amount of 30 parts by weight or less based on 100 parts by weight of the product.

Examples of the additives include cross-linkers, modifiers, flame-retardants, antioxidants, pigments and/or uv protectives. These additives are added to the composition before molding, with the aim of improving the physical properties required by the final product, such as strength, hardness, specific gravity, oxidation resistance, flame resistance and anti-aging. For example, a pigment is used for products for use in pavement block or a flame retardant is added for products for use in interior decoration, such as sheets for covering the bottom of a floor or room.

A description will be given of the method for producing a product from waste synthetic resins, below.

First, a mass of various waste synthetic resins is crushed and pulverized and the binder is pulverized, too. The pulverized resins and binder are mixed with necessary additives. This mixture is heated for melting with stirring and then, subjected to extrusion molding in an extruder. It is preferable that the mixing and the melting are carried out, not by using a separate heater or stirrer but in the extruder, in series.

Preferably, the heating temperature ranges from about 150 to 300 °C. For example, when the mixture is heated at a temperature lower than 150 °C , some of the resins may remain unmolten, deleteriously affecting the physical properties of the final product. On the other hand, because almost all thermoplastic waste resins are melted at about 300 °C, it is economically unfavorable if higher temperatures are used.

Thermosetting waste resins may be used as binders and additives. Thus, thermoplastic resins and thermosetting resins are preferably used at a ratio of 9:1.

The stirring is done at a speed range of about 50-70 rpm, to homogeneously mix and disperse the molten mixture. After the amount and the melting point of the resins and the additives must be taken into account, the stirring speed is determined.

Extrusion molding is preferable but not limitative. Injection molding or blow molding may be performed according to the required shapes or uses of the final products. The final products have their own shapes suitable for their uses. For example, when they are used to transport foul water, they are formed into pipes. When used as construction molds or floor or room construction materials, they are formed into sheets.

A better understanding of the present invention may be obtained in light of following examples which are set forth to illustrate, but are not to be construed to limit, the present invention.

### EXAMPLE I

900 kg of a mixture of waste synthetic resins (polyethylene 150 kg, polypropylene 150 kg, polystyrene 150 kg, polyvinylchloride 150 kg, polyamide 150 kg, acrylonitrile/butadiene/styrene 150 kg) were cut into particles about 3 mm long and pulverized to 100 mesh (US sieve number). To this mixture, 25 kg of melamine resin and 25 kg of FRP, which were pulverized to about 100 mesh, were added, followed by the addition of 50 kg of slaked lime which was pulverized to 100 mesh. This resulting mixture (1 ton) as added with 1 kg of black pigment and stirred at 60 rpm in an extruder. The temperature of this extruder was increased to about 250 °C to completely melt the mixture. Thereafter, the molten fluid was extruded to a continuous sheet with a width of 30 cm and a thickness of 3 mm, which was, then, obliquely rolled to form a pipe which was 150 mm in diameter and 15 mm in thickness. The pipe was tested for tensile strength and compression load. A flattened-close test was also performed for the pipe. The results are given as shown in the following Table 1. For the compression load, a specimen was inserted between two plates and compressed at a speed of 10 mm/min until the inner diameter and the outer diameter of the pipe were reduced at a quantity of 5 % or 10 %, respectively. This compression load test was carried out three times and the measurements were averaged.

**TABLE 1**

| Properties | Example I (Pipe) |
|---|---|
| Tensile Strength (kgf/cm2) | 54.7 |

| Compression Load | |
|---|---|
| inner diameter 5% compression (kgf) | 51.2 |
| outer diameter 10% compression (kgf) | 503 |
| Flattened-close Test (inner diameter 50%) | Pass |

As apparent from the data of Table 1, the pipe manufactured in Example I has such advantageous physical properties that it can be used as a sewer pipe.

### EXAMPLE II

850 kg of a mixture of waste synthetic resins (polyethylene 170 kg, polypropylene 170 kg, polyvinylchloride 170 kg, polyamide 170 kg, acrylonitrile/butadiene/styrene 170 kg) were cut into particles about 3 mm long and pulverized to 100 mesh (US sieve number). To this mixture, 25 kg of melamine resin and 25 kg of FRP, which were pulverized to about 100 mesh, were added, followed by the addition of 50 kg of slaked lime and 50 kg of loess which were pulverized to 100 mesh. This resulting mixture (1 ton) was added with 50 g of black pigment and stirred at 60 rpm in an extruder. The temperature of this extruder was increased to about 250 °C to completely melt the mixture. Thereafter, the molten fluid was extrusion-molded through a roller to a continuous sheet with a width of 50 cm and a thickness of 12 mm, which was, then, cooled with water of 18 °C.

When observed by the naked eye, the surface of the sheet appeared to be smooth. A scanning electron microscope (SEM) photograph was taken of the surface with a magnification power of 20 times and is shown in Fig. 1(a). The physical properties of the molded sheet, including specific gravity, tensile strength, flex strength, impact strength and coefficient of linear thermal expansion, were measured and are given as shown in Table 2, below.

### EXAMPLE III

800 kg of a mixture of waste synthetic resins (polycarbonate 100 kg, polyacetal 100 kg, polyvinylchloride 100 kg, polyamide 100 kg, acrylonitrile/butadiene/styrene 100 kg, polystyrene 100 kg, polypropylene 100 kg, polyethylene 100 kg) were cut into particles about 3 mm long and pulverized to 100 mesh (US sieve number). To this mixture, 50 kg of melamine resin and 50 kg of FRP, which were pulverized to about 100 mesh, were added, followed by the addition of 50 kg of coal ash and 50 kg of powdery elvan which were pulverized to 100 mesh. This resulting mixture (1 ton) was added with 50 g of black pigment and stirred at 60 rpm in an extruder. The temperature of this extruder was increased to about 250 °C to completely melt the mixture. Thereafter, the molten fluid was extrusion-molded through a roller to a continuous sheet with a width of 50 cm and a thickness of 12 mm, which was, then, cooled with water of 18 °C.

When observed by the naked eye, the surface of the sheet appeared to be smooth. A SEM photograph was taken of the surface with a magnification power of 20 times and is shown in Fig. 1(b). The physical properties of the molded sheet, including specific gravity, tensile strength, flex strength, impact strength and coefficient of linear thermal expansion, were measured and are given as shown in Table 2, below.

### EXAMPLE IV

800 kg of a mixture of waste synthetic resins (polyvinylchloride 200 kg, polyamide 200 kg, polypropylene 200 kg, polyethylene 200 kg) were cut into particles about 3 mm long and pulverized to 100 mesh (US sieve number). To this mixture, 30 kg of phenol resin, 30 kg of epoxy resin and 30 kg of melamine resin, which were pulverized to about 100 mesh (US sieve number), were added, followed by the addition of 30 kg of taclum powder, 30 kg of white clay and 40 kg of coal ash which were pulverized to 100 mesh. This resulting mixture (1 ton) was added with 50 g of black pigment and stirred at 60 rpm in an extruder. The temperature of this extruder was increased to about 250 °C to completely melt the mixture. Thereafter, the molten fluid was extrusion-molded through a roller to a continuous sheet with a width of 50 cm and a thickness of 12 mm, which was, then, cooled with water of 18 °C.

When observed by the naked eye, the surface of the sheet appeared to be smooth. A scanning electron microscope (SEM) photograph was taken of the surface with a magnification power of 20 times and is shown in Fig. 1(c). The physical properties of the molded sheet, including specific gravity, tensile strength, flex strength, impact strength and coefficient of linear thermal expansion, were measured and are given as shown in Table 2, below.

**TABLE 2**

| Properties | Exmp.II (Sheet) | Exmp.III (Sheet) | Exmp.IV (Sheet) |
|---|---|---|---|
| Tensile Strength (kgf/cm2) | 97.6 | 114 | 91.1 |
| Flex Strength (kgf/mm2) | 1.44 | 1.71 | 1.24 |
| Impact strength (kgf·cm/cm2) | 1.4 | 2.3 | 6.0 |
| Coeff. of Linear Expan. (µm/m·°C) | 129 | 152 | 196 |
| * Temp. range upon test for coeff. of linear expansion: -30∼30°C | | | |

The data of Table 2 shows that the sheets manufactured according to the present invention are far superior in strength and have good thermal resistance and weather resistance such that they can be used as construction materials, such as construction molding and sheets for covering the bottom of a floor or room.

As described hereinbefore, the products manufactured according to the method of the present invention is better than or as good as conventional products, such as sewer pipes and construction sheets, in strength and their surfaces are smooth and are not distorted because waste synthetic resins can be completely mixed and melted.

In addition, the method of the present invention is very simple, economically favorable and useful in protecting the environment because almost all waste synthetic resins can be reused without being classified, selected or washed irrespective of their kinds.

The present invention has been described in an illustrative manner, and it is to be understood the terminology used is intended to be in the nature of description rather than of limitation.

Many modifications and variations of the present invention are possible in fight of the above teachings. Therefore, it is to be understood that within the scope of the appended claims, the invention may be practiced otherwise than as specifically described.

## Claims

1. A method for producing a form from waste synthetic resins, wherein the waste synthetic resins are pulverized to a size smaller than 100 mesh (US sieve number), mixed with a binder while stirring at about 50-70 rpm, melted at a temperature of about 150-300 °C, and subjected to extrusion-molding, said binder amounting to about 10-30 % by weight, in total and being selected from the group consisting of coal ash, talc, elvan, slake lime, white clay, loess, clay and the mixtures thereof.

2. A method in accordance with claim 1, wherein said waste synthetic resins are further mixed with at least one powdery additive selected from the group consisting of a cross-linker, a modifier, a flame-retardant, an antioxidant, a pigment and a uv protective during the stirring step.

3. A product produced by a method in which waste synthetic resins are pulverized to a size smaller than 100 mesh (US sieve number), mixed with a binder while stirring at about 50-70 rpm, melted at a temperature of about 150-300 °C, and subjected to extrusion-molding, said binder amounting to about 10-30 % by weight, in total and being selected from the group consisting of coal ash, talc, elvan, slake lime, white clay, loess, clay and the mixtures thereof.

4. A form in accordance with claim 3, wherein said waste synthetic resins are further mixed with at least one powdery additive selected from the group consisting of a cross-linker, a modifier, a flame-retardant, an antioxidant, a pigment and a uv protective during the stirring step.
